(19) Europäisches Patentamt
European Patent Office
Office européen des brevets

(11) **EP 1 604 162 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(21) Anmeldenummer: **04703774.2**

(22) Anmeldetag: **21.01.2004**

(51) Int Cl.:
**F28D 7/16** *(2006.01)* **F28F 27/02** *(2006.01)*

(86) Internationale Anmeldenummer:
**PCT/EP2004/000436**

(87) Internationale Veröffentlichungsnummer:
**WO 2004/083761 (30.09.2004 Gazette 2004/40)**

(54) **ROHRBÜNDEL-WÄRMEAUSTAUSCHER**

TUBE BUNDLE HEAT EXCHANGER

ECHANGEUR THERMIQUE A FAISCEAU TUBULAIRE

(84) Benannte Vertragsstaaten:
**AT BE BG CH CY CZ DE DK EE ES FI FR GB GR HU IE IT LI LU MC NL PT RO SE SI SK TR**

(30) Priorität: **17.03.2003 DE 10311529**

(43) Veröffentlichungstag der Anmeldung:
**14.12.2005 Patentblatt 2005/50**

(73) Patentinhaber: **Tuchenhagen Dairy Systems GmbH**
**31157 Sarstedt (DE)**

(72) Erfinder:
• **PIEPRZAK, Peter**
**21521 Dassendorf (DE)**
• **GUENTHER, Marcus**
**23879 Mölln (DE)**

(74) Vertreter: **Graalfs, Edo et al**
**Patentanwälte**
**Hauck, Graalfs, Wehnert**
**Döring, Siemens, Schildberg**
**Postfach 11 31 53**
**20431 Hamburg (DE)**

(56) Entgegenhaltungen:
**EP-A- 0 357 907** **DE-A- 1 501 484**
**DE-A- 2 907 113** **DE-U- 9 403 913**
**US-B1- 6 302 191**

EP 1 604 162 B1

**Beschreibung**

TECHNISCHES GEBIET

Die Erfindung betrifft einen Rohrbündel-Wärmeaustauscher, insbesondere für die Nahrungsmittel- und Getränkeindustrie, mit einem von einem Außenmantel umgebenen Außenkanal für ein Wärmeträgermedium, mit einer Anzahl von sich achsparallel zum Außenmantel durch den Außenkanal erstreckenden, gemeinsam einen Innenkanal bildenden, endseitig jeweils in der Rohrträgerplatte abgestützten Innenrohren, mit einem für alle Innenrohre gemeinsamen, in einem festlagerseitigen Austauscherflansch ausgebildeten Eintritt oder Austritt und einem gemeinsamen, in einem loslagerseitigen Anschlussstutzen ausgebildeten Austritt bzw. Eintritt für ein Produkt, und mit wenigstens einem die Strömung im Anströmbereich der Rohrträgerplatte beeinflussenden Verdrängerkörper.

STAND DER TECHNIK

Ein Rohrbündel-Wärmeaustauscher der gattungsgemäßen Art ist aus der **DE-U-94 03 913** bekannt. Ein jüngerer diesbezüglicher Stand der Technik, der sich prinzipiell jedoch nicht gegenüber dem älteren Stand der Technik unterscheidet, beschreibt die Firmendruckschrift "Röhrenwärmetauscher VARITUBE® ", GEA Tuchenhagen, Liquid Processing Division, 632d-00, aus dem Jahre 2000.
Derartige Rohrbündel-Wärmeaustauscher sind aufgrund ihrer Querschnittsgeometrie generell besser als andere Wärmeaustauscher-Bauarten, wie beispielsweise Platten-Wärmeaustauscher, geeignet zur thermischen Behandlung von Produkten mit hohen und niedrigen Viskositäten, von feststoffhaltigen Produkten mit ganzen Stücken, Pulpe oder Fasern. Gleichwohl ist auch hier zu beobachten, dass sich bei faserigen Medien, beispielsweise Säften mit Fruchtfleisch, Ablagerungen an den Eintrittsöffnungen der Innenrohre der Rohrträgerplatten bilden. Die Behandlung bei relativ hohen Temperaturen begünstigt die Agglomeration von Fasern und die Bildung von Pulpe. Diese lagern sich bevorzugt an den Stegen zwischen den mehrfach angeordneten Innenrohren und an den quer zur Strömungsrichtung orientierten Flächen der Rohrträgerplatte ab und können dort zu Verstopfungen führen (**Figur 9**). Temporäre Ablagerungen lösen sich von Zeit zu Zeit und die Klumpen gelangen dann ggf. in die für den Endverbraucher bestimmte Verpackung des jeweiligen Produkts, wo sie unerwünscht sind.
Das vorstehend geschilderte Problem ist seit langem bekannt und es wurde beispielsweise bereits vorgeschlagen, die angeströmten Rohrträgerplatten eines Rohrbündel-Wärmeaustauschers jeweils mit mechanischen Mitteln von Ablagerungen frei zu halten. Ein diesbezüglicher, druckschriftlich nicht zu belegender Stand der Technik sieht vor, den in Frage kommenden Bereich der jeweiligen Rohrträgerplatte mit einer rotierenden Bürste zu bestreichen, die durch die Energie des strömenden Produktes angetrieben wird. Derartige Lösungen sind jedoch hygienisch bedenklich und konnten sich in der Praxis nicht durchsetzen.
In der **EP-A-0 246 111** werden bereits Leitvorrichtungen beschrieben, die eine mit Festkörpem beladene Gasströmung im Anströmbereich einer Rohrträgerplatte eines Rohrbündel-Wärmeaustauschers beeinflussen. Zu diesem Zweck trägt jedes vom Gas durchströmte Innenrohr des Rohrbündel-Wärmeaustauschers ein in Richtung der ankommenden Gasströmung konisch erweitertes Einlaufrohr. Jeweils vier in quadratischer Anordnung benachbarte Einlaufrohre sind dabei vorzugsweise so bemessen, dass sie sich gegenseitig punktförmig berühren und dass die Fläche, die zwischen den sich berührenden vier kreisförmigen Rohrquerschnitten gebildet wird, jeweils mit der vorgenannten Leitvorrichtung bestückt ist. Die Leitvorrichtung füllt dabei mit ihrem Fußqüerschnitt die Fläche gänzlich aus und sie ist, ausgehend von den vier Berandungskreisbogen des Fußquerschnitts und in Richtung der ankommenden Gasströmung gesehen, jeweils konisch verjüngt. Durch die jeweilige Leitvorrichtung auf jeder der besagten Flächen der durch eine Vielzahl von Innenrohren gebildeten Rohrmatrix wird verhindert; dass sich die Feststoffbestandteile des anströmenden Gases zwischen den konisch erweiterten Rohrstutzen auf der Rohrträgerplatte ablagern. Statt dessen werden durch die jeweilige Leitvorrichtung die Gasströmung und damit die in ihr enthaltenen Feststoffbestandteile in das jeweils nächstliegende konische Einlaufrohr eingeleitet.
Durch die **DE 1 501 484 A** ist ein Durchlaufkühler bekannt, der als Rohrbündel-Wärmeaustauscher ausgebildet ist und dessen Kühlrohre flacheckigen, in Durchlaufrichtung des zu kühlenden Mediums sich verjüngenden Querschnitt aufweisen. Das abzukühlende Medium, vorzugsweise kondensierbare Dämpfe, soll in allen nebeneinander liegenden Kühlrohren gleichermaßen abkühlen und dadurch kondensieren. Um dies zu erreichen ist im Bereich der Einströmenden der nebeneinander liegenden Kühlrohre ein gemeinsamer Verteilerraum vorgesehen, in den eine Zuführleitung für das abzukühlende Medium mündet. Zwischen der Mündung der Zuführleitung und den Einströmenden der Kühlrohre ist ein zu letzteren hin konkav gekrümmtes Prallblech vorgesehen, das etwa kreisrunde Form und einen etwas kleineren Durchmesser als der die Kühlrohre umschließende Mantel des Durchlaufkühlers hat. Durch dieses Prallblech wird erreicht, dass das zu kühlende Medium aus der Zuführleitung nicht direkt in die Einströmenden der Kühlrohre gelangen kann, die in der Verlängerung der Zuführleitung liegen. Das zu kühlende Medium wird an dem Prallblech zunächst nach außen abgelenkt und gelangt über den Ringspalt, der zwischen dem äußeren Rand des Prallblechs und dem Mantel gebildet ist, in den Bereich der Einströmenden der Kühlrohre, um dann allen Kühlrohren möglichst gleichmäßig zugeführt zu werden.

Es ist Aufgabe der vorliegenden Erfindung, einen Rohrbündel-Wärmeaustauscher der gattungsgemäßen Art derart weiterzubilden, dass Ablagerungen aus feststoffhaltigen Produkten in den kritischen Bereichen der Rohrträgerplatte verhindert werden, ohne dass hygienisch, reinigungstechnisch und strömungsphysikalisch problematische Lösungen in Kauf zu nehmen sind.

## ZUSAMMENFASSUNG DER ERFINDUNG

Diese Aufgabe wird durch einen Rohrbündel-Wärmeaustauscher mit den Merkmalen des Anspruchs 1 oder des Nebenanspruchs 14 gelöst. Vorteilhafte Ausführungsformen des Rohrbündel-Wärmeaustauschers sind Gegenstand der Unteransprüche.

Die erfindungsgemäße Anordnung eines Verdrängerkörpers im Anströmbereich der Rohrträgerplatte hält diese nachweislich und nicht vorhersehbar nachhaltig frei von faserigen Ablagerungen und Pulpe. Der Verdrängerkörper selbst, wenn er, wie vorgeschlagen, strömungsgünstig ausgebildet ist, verursacht nur einen geringen und hinnehmbaren Druckverlust, seine Anordnung ist hygienisch und reinigungstechnisch völlig unbedenklich.

Die Wirksamkeit der vorgeschlagenen Maßnahme erklärt sich aus zwei strömungsmechanischen Mechanismen. Dies ist zum einen die axialsymmetrische Aufteilung der Strömung, ihre Umlenkung nach außen und gleichzeitige Beschleunigung in einer düsenartigen Anordnung. Beschleunigte Strömungen sind nicht ablösungsgefährdet, sodass eine orientierungslose Querbewegung und Querlage der längeren und problematischen faserigen Bestandteile zur Hauptströmungsrichtung eher ausgeschlossen werden kann. Die faserigen Bestandteile müssen sich vielmehr unter dem Einfluss der Strömungskräfte in Richtung der Stromlinien orientieren. Im Bereich hinter dem Verdrängungskörper verbleibt den faserigen Bestandteilen keine Zeit, sich quer zur Hauptströmungsrichtung neu zu orientieren; sie werden überwiegend in die Innenrohre "eingefädelt".

Der zweite Wirkmechanismus ist darin zu sehen, dass die Strömung hinter dem Verdrängerkörper von außen nach innen umgelenkt wird, weil die Strömung auch zwangsläufig den inneren Anströmbereich der Rohrträgerptatte durchströmen muss. Darüber hinaus bildet der Verdrängerkörper im Anschluss an den düsenartig verengten Ringspaltquerschnitt zusammen mit dem erweiterten Durchtrittsquerschnitt einen sich erweiternden Ringspaltquerschnitt. Insgesamt ergibt sich dadurch eine gekrümmte, verzögerte Bewegung. Eine derartige Strömungsbewegung löst erfahrungsgemäß ab und erzeugt eine Sekundärströmung, die offensichtlich ein Freispülen der kritischen Bereiche (Stege) der Rohrträgerplatte bewirkt.

Die Ablösung wird gemäß einer vorteilhaften Ausgestaltung durch eine definierte Strömungsabrissstelle, die an einigen Ausführungsformen des Verdrängerkörpers in Form einer Strömungsabrisskante planmäßig ausgeführt und im erweiterten Durchtrittsquerschnitt positioniert ist, begünstigt.

Die strömungspysikalische Funktion des vorgeschlagenen Verdrängerkörpers kommt besonders vorteilhaft zum Tragen, wenn, wie dies eine erste vorteilhafte Ausführungsform vorsieht, die Strömungsabrissstelle an der engsten Stelle (minimaler Rinspaltquerschnitt $A_{Smin}$) des Ringspaltquerschnittes ($A_S$) positioniert ist

Eine zweite diesbezügliche Ausführungsform sieht vor, die Strömungsabrissstelle, in Strömungsrichtung gesehen, hinter der engsten Stelle (minimaler Rinspaltquerschnitt $A_{Smin}$) des Ringspaltquerschnittes ($A_S$) zu positionieren. Hinsichtlich der Bemessung des minimalen Ringspaltquerschnittes $A_{Smin}$ hat es sich gezeigt, dass beste Ergebnisse erzielt werden, wenn das Verhältnis des Nenndurchtrittsquerschnitts $A_0$ eines Verbindungsbogens zum minimalen Ringspaltquerschnitt ($A_{Smin}$) mit $1,5 \leq \dfrac{A_0}{A_{S\min}} \leq 2,5$, insbesondere mit $\dfrac{A_0}{A_{S\min}} = 2$, ausgeführt ist. Bei diesen Querschnittsverhältnissen wird die mittlere maximale Strömungsgeschwindigkeit $V_{max}$ im minimalen Ringspaltquerschnitt $A_{Smin}$ im entsprechenden Verhältnis gegenüber der mittleren Strömungsgeschwindigkeit v im Innenrohr bzw. im Verbindungsbogen erhöht.

Ausführungsformen des Verdrängerkörpers, die mit einer definierten Strömungsabrisskante ausgeführt sind, sind gemäß einem weiteren Vorschlag mit der Rohrträgerplatte fest verbunden. Eine derartige Ausführung ist immer dann möglich, wenn die angeströmte Rohrträgerplatte frei zugänglich ist. Beim Neubau eines Rohrbündel-Wärmeaustauschers ist dies stets der Fall. Bei Nachrüstung bestehender Aggregate ist die Zugänglichkeit zum loslagerseitigen Austauscherflansch immer möglich, wenn der Rohrbündel-Wärmeaustauscher gemäß Druckschrift **DE-U-94 03 913** oder der vorgenannten **Firmendruckschrift 632d-00** ausgeführt ist.

Zur Nachrüstung der festlagerseitigen Rohrträgerplatte mit einem Verdrängerkörper gemäß der Erfindung wird vorgeschlagen, diesen als Kugel auszubilden, die im erweiterten Durchtrittsquerschnitt frei beweglich positioniert ist. Geeignete Materialien für diese Kugel sind vorzugsweise Kunststoffe wie Polytetrafluorethylen (PTFE), vor allem teilkristalline Hochleistungskunststoffe, wie beispielsweise Polyetheretherketon (PEEK), oder amorphe Thermoplaste, wie beispielsweise Polyphenylsulfon (PPSU). Die beiden letztgenannten sind vor allem hinreichend mechanisch widerstandsfähig, hygienisch unbedenklich und chemisch insbesondere gegen Reinigungsmittel beständig.

Zur Sicherstellung einer hinreichenden Wirksamkeit der vorgeschlagenen Maßnahme wird, gemäß einem weiteren Vorschlag der Erfindung, ein Außendurchmesser des Verdrängerkörpers derart bemessen, dass ein durch einen jeweiligen Rohrinnendurchmesser gebildeter Durchtrittsquerschnitt der am äußeren Rand der Rohrträgerplatte gelegenen Innenrohre jeweils etwa zur Hälfte durch eine in Richtung der Rohrträgerplatte projizierte Anströmfläche des Verdrängerkörpers abgedeckt ist.

Damit die mit der Rohrträgerplatte fest verbundenen verschiedenen Ausführungsformen des Verdrängerkörpers in strömungstechnisch günstiger Weise dort befestigt werden können, wird weiterhin vorgesehen, dass im Zentrum des Außenmantels, unabhängig von der Anzahl der Innenrohre, kein Innenrohr angeordnet ist.

Die Anforderungen, die an den erfindungsgemäßen Verdrängerkörper gestellt werden, bestehen nicht nur darin, dass er eine besonders wirksame Einflussnahme auf den Anströmbereich der Rohrträgerplatte ausübt, sondern er ist auch dahingehend auszugestalten, dass er möglichst geringe Druckverluste bewirkt und nicht selbst zu einem Problem für Ablagerungen wird. Eine vorteilhafte Ausführungsform sieht vor, dass der Verdrängerkörper aus einem axialsymmetrischen vorderen Teil und einem axialsymmetrischen hinteren Teil gebildet wird, die an ihrem Verbindungsquerschnitt den größten gemeinsamen Außendurchmesser $d_{max}$ in Form einer definierten Strömungsabrisskante ausbilden. Dabei wird er hinsichtlich seiner axialen längenmäßigen Bemessung zweckmäßig derart ausgelegt, dass eine zweite axiale Länge $l_2$ des hinteren Teils im Vergleich zu einer ersten axialen Länge $l_1$ des vorderen Teils kleiner, vorzugsweise mit $l_2 \leq 0{,}5\, l_1$, ausgeführt ist.

Es ist in diesem Zusammenhang von Vorteil, wenn der hintere Teil durch eine konvexe Außenkontur mit einem zweiten Krümmungsradius berandet ist. Zur Befestigung des Verdrängerkörpers an der Rohrträgerplatte dient ein am hinteren Teil angeordneter Schaft mit einer dritten axialen Länge und einem gegenüber dem Außendurchmesser des Verdrängerkörpers deutlich reduzierten Schaftdurchmesser, der eine Abrundung zum zweiten Krümmungsradius $R_2$ mit einer Schaftausrundung $r_4$ aufweist und über den eine stoff-, form und/oder kraftschlüssige Verbindung erfolgen kann. Der Schaft wird vorzugsweise zylindrisch ausgeführt und in einer bevorzugten Ausführungsform mit dem von einem Innenrohr freien Zentrum der Rohrträgerplatte verschweißt.

Hinsichtlich der konkreten geometrischen Ausgestaltung des vorderen Teils des erfindungsgemäßen, mit der Rohrträgerplatte fest verbundenen Verdrängerkörpers werden drei Ausführungsformen vorgeschlagen, die hinsichtlich ihrer Wirksamkeit in Bezug auf die Verhinderung von Ablagerungen auf der Rohrträgerplatte annähernd gleichwertig sind. Hinsichtlich ihrer Neigung, an der exponiertesten Stelle, nämlich der vordersten Anströmfläche, selbst Ort für Ablagerungen zu werden, unterscheiden sie sich jedoch.

Beste Ergebnisse, das heißt völliges Freibleiben von Ablagerungen auf der Verdrängeroberfläche auch nach längerer Betriebszeit werden in nicht erwarteter Weise mit einer ersten Ausführungsform des Verdrängerkörpers gemäß der Erfindung erreicht, dessen vorderer Teil pilzförmig konvex gekrümmt ausgebildet ist, wobei zwei erste Krümmungsradien am vorderen Ende mit einer ersten Spitzenabrundung verbunden sind.

Eine zweite Ausführungsform des Verdrängerkörpers, dessen vorderer Teil als gerader Kreiskegel mit einer zweiten Spitzenabrundung ausgeführt ist, zeigt geringfügige Ablagerungserscheinungen im Bereich der Kegelspitze, wobei sich geometriebedingt nur geringe Mengen Ablagerungen bilden können, die sich dann von Zeit zu Zeit ablösen und bei der Umströmung des Verdrängerkörpers höchstwahrscheinlich vereinzelt werden.

Mit den Ergebnissen der zweiten Ausführungsform sind die Ergebnisse einer dritten Ausführungsform des Verdrängerkörpers vergleichbar, dessen vorderer Teil konisch und mit einer konkav gekrümmten Mantelfläche ausgebildet ist, wobei zwei dritte Krümmungsradien am vorderen Ende mit einer dritten Spitzenabrundung verbunden sind.

## KURZBESCHREIBUNG DER ZEICHNUNGEN

Ausführungsbeispiele des vorgeschlagenen Rohrbündel-Wärmeaustauschers gemäß der Erfindung sind in der Zeichnung dargestellt und werden nachfolgend beschrieben. Es zeigen

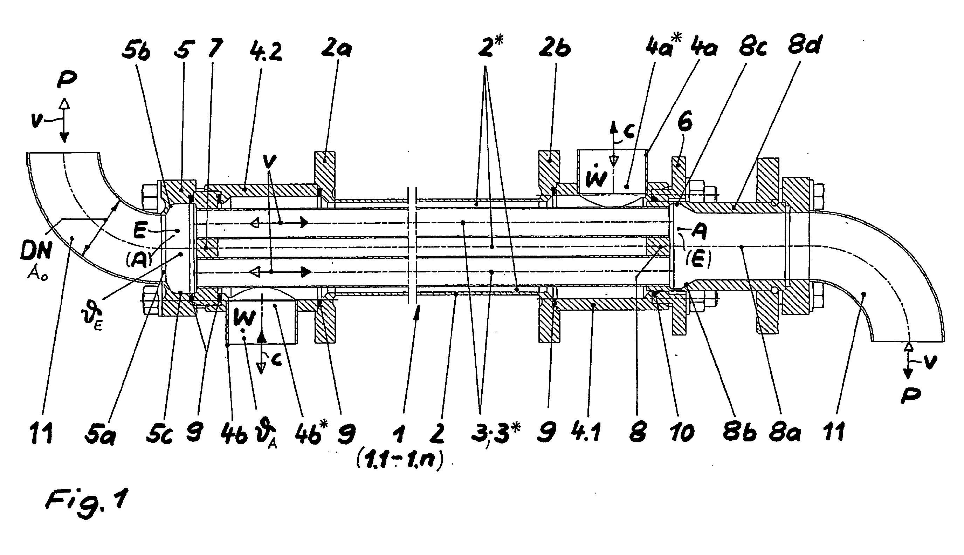

**Figur 1**      einen Mittelschnitt durch ein sog. Rohrbündel als modularer Teil eines in den eingangs genannten Druckschriften beschriebenen, ggf. aus einer Vielzahl solcher Rohrbündel bestehenden Rohrbündel-Wärmeaustauschers, auf dessen Rohrträgerplatten die erfindungsgemäßen Merkmale Anwendung finden;

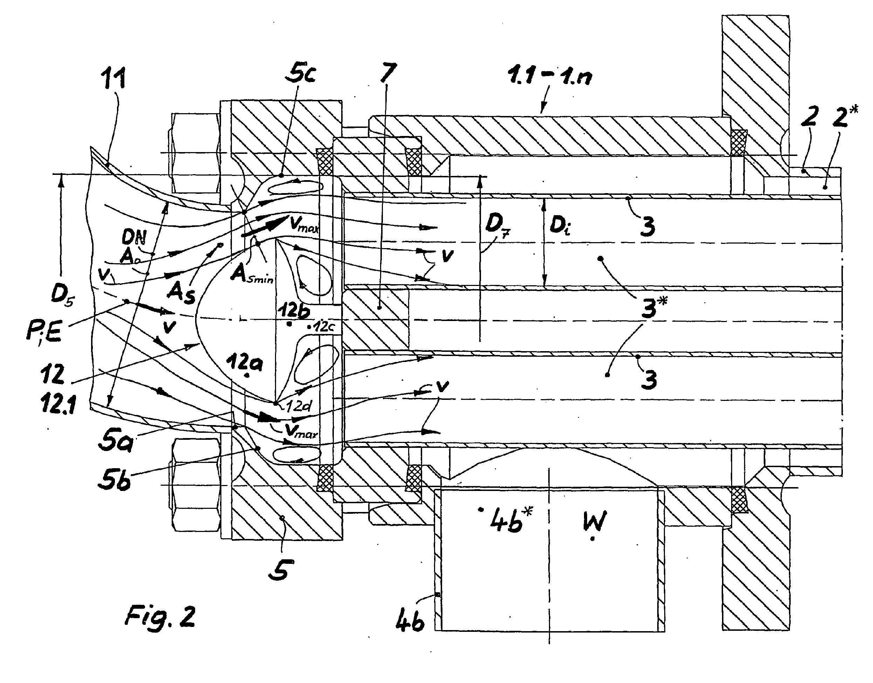

**Figur 2**      einen Mittelschnitt durch das Rohrbündel gemäß Figur 1 im Bereich der festlagerseitigen Rohrträgerplatte, wobei im Anströmbereich dieser Rohrträgerplatte eine mit dieser fest verbundene erste favorisierte Ausführungsform eines Verdrängerkörpers angeordnet ist, der sich durch einen pilzförmig konvex gekrümmten vorderen Teil auszeichnet;

| Figur 3 | gleichfalls einen Mittelschnitt durch das Rohrbündel gemäß Figur 1 im Bereich der festlagerseitigen Rohrträgerplatte, wobei im Anströmbereich dieser Rohrträgerplatte eine mit dieser fest verbundene zweite favorisierte Ausführungsform eines Verdrängerkörpers angeordnet ist, dessen vorderer Teil als gerader Kreiskegel mit einer Spitzenabrundung ausgeführt ist; |
|---|---|
| Figur 4 | gleichfalls einen Mittelschnitt durch das Rohrbündel gemäß Figur 1 im Bereich der festlagerseitigen Rohrträgerplatte, wobei im Anströmbereich dieser Rohrträgerplatte eine mit dieser fest verbundene dritte favorisierte Ausführungsform eines Verdrängerkörpers angeordnet ist, dessen vorderer Teil konisch und mit einer konkav gekrümmten Mantelfläche ausgebildet ist; |
| Figur 5 | einen Mittelschnitt durch das Rohrbündel gemäß Figur 1 im Bereich der loslagerseitigen Rohrträgerplatte, wobei im Anströmbereich dieser Rohrträgerplatte eine vierte Ausführungsform eines Verdrängerkörpers, nämlich eine Kugel, angeordnet ist, die im erweiterten Durchtrittsquerschnitt frei beweglich positioniert ist; |
| Figur 6, Figur 7, Figur 8 | die Verdrängerkörper gemäß den Figuren 2, 3 und 4 in ihrer jeweiligen Einbaulage, wobei jeweils geometrische Einzelheiten dargestellt sind und |
| Figur 9 | eine Ansicht einer Rohrträgerplatte nach dem Stand der Technik von ihrer Anströmseite her gesehen, wobei die bevorzugten Bereiche, an denen Anlagerung von Fasern und Pulpe festgestellt wird, markiert sind. |

<u>BEZUGSZEICHENLISTE DER VERWENDETEN ABKÜRZUNGEN</u>

| 1 | Rohrbündel-Wärmeaustauscher |
|---|---|
| 1.1,1.2. ...,1.i, ...,1.n | Rohrbündel |
| 1.i | i-tes Rohrbündel |
| 1.i+1 | dem Rohrbündel 1.i nachgeschaltetes Rohrbündel |
| 1. i-1 | dem Rohrbündel 1. i vorgeschaltetes Rohrbündel |
| 2 | Außenmantel |
| 2* | Außenkanal |
| 2a | festlagerseitiger Außenmantelflansch |
| 2b | loslagerseitiger Außenmantelflansch |
| 3 | Innenrohr |
| 3* | Innenkanal |
| 4.1 | erstes Gehäuse |
| 4a | erster Anschlussstutzen |
| 4a* | erster Querkanal |
| 4.2 | zweites Gehäuse |
| 4b | zweiter Anschlussstutzen |
| 4b* | zweiter Querkanal |
| 5 | festlagerseitiger Austauscherflansch |
| 5a | erste Anschlussöffnung |
| 5b | erster konischer Übergang |
| 5c | erster erweiterter Durchtrittsquerschnitt |
| 6 | loslagerseitiger Austauscherflansch |
| 7 | festlagerseitige Rohrträgerplatte (Rohrspiegelplatte) |
| 8 | loslagerseitige Rohrträgerplatte (Rohrspiegelplatte) |
| 8a | zweite Anschlussöffnung |
| 8b | zweiter konischer Übergang |
| 8c | zweiter erweiterter Durchtrittsquerschnitt |
| 8d | loslagerseitiger Anschlussstutzen |
| 9 | Flachdichtung |
| 10 | O-Ring |

| | |
|---|---|
| 11 | Verbindungsbogen |
| 12 | Verdrängerkörper |
| 12a | vorderer Teil |
| 12b | hinterer Teil |
| 12c | Schaft |
| 12d | Strömungsabrissstelle |
| i = 1 bis 3 | Ausführungsformen |
| 12.ia | vorderer Teil des Verdrängerkörpers 12.i |
| 12.ib | hinterer Teil des Verdrängerkörpers 12.i |
| 12.ic | Schaft des Verdrängerkörpers 12.i |
| 12.id | definierte Strömungsabrisskante des Verdrängerkörpers 12.i |
| 12.1 | erster Verdrängerkörper |
| 12.2 | zweiter Verdrängerkörper |
| 12.3 | dritter Verdrängerkörper |
| 12.4 | Kugel |
| 12.4d | undefinierte Strömungsabrissstelle |
| $a_{max}$ | projizierte Anströmfläche des Verdrängerkörpers |
| c | Strömungsgeschwindigkeit im Außenmantel |
| $d_{max}$ | Außendurchmesser des Verdrängerkörpers |
| $d_3$ | Schaftdurchmesser |
| $l_1$ | erste axiale Länge des vorderen Teils des Verdrängerkörpers |
| $l_2$ | zweite axiale Länge des hinteren Teils des Verdrängerkörpers |
| $l_3$ | dritte axiale Länge des Schaftes des Verdrängerkörpers |
| $r_1$ | erste Spitzenabrundung |
| $r_2$ | zweite Spitzenabrundung |
| $r_3$ | dritte Spitzenabrundung |
| $r_4$ | Schaftausrundung |
| v | mittlere Strömungsgeschwindigkeit im Innenrohr |
| $V_{max}$ | mittlere maximale Strömungsgeschwindigkeit im minimalen Ringspaltquerschnitt $A_{Smin}$ |
| A | Austritt |
| $A_o$ | Nenndurchtrittsquerschnitt des Verbindungsbogens |
| $A_S$ | Ringspaltquerschnitt |
| $A_{SE}$ | erweiternder Ringspaltquerschnitt |
| $A_{Smln}$ | minimaler Ringspaltquerschnitt (engste Stelle des Ringspaltquerschnittes $A_S$ |
| $D_1$ | Rohrinnendurchmesser |
| DN | Nenndurchmesser des Verbindungsbogens ($A_o = DN^2 \Pi/4$) |
| $D_5$ | größter Durchmesser des ersten erweiterten Durchtritts querschnitts 5c im festlagerseitigen Austauscherflansch 5 |
| $D_7$ | angeströmter äußerer Durchmesser der festlagerseitigen Rohrträgerplatte 7 ($D_7 = D_5$) |
| $D_8$ | größter Durchmesser des zweiten erweiterten Durchtrittsquer schnitts 8c im loslagerseitigen Anschlussstutzen 8d |
| E | Eintritt |
| F | abgelagerte Fasern, Pulpe |
| P | Produkt (temperaturbehandelte Seite |
| $R_1$ | erster Krümmungsradius des vorderen Teils des Verdrängerkörpers |
| $R_2$ | zweiter Krümmungsradius des hinteren Teils des Verdrängerkörpers |
| $R_3$ | dritter Krümmungsradius des vorderen Teils des Verdrängerkörpers |
| S | Steg |
| W | Wärmeträgermedium |
| $\vartheta_A$ | Austrittstemperatur des Wärmeträgermedium |
| $\vartheta_E$ | Eintrittstemperatur des Produktes |
| $\Delta\vartheta = \vartheta_A - \vartheta_E$ | Temperaturdifferenz am Produkteintritt |

DETAILLIERTE BESCHREIBUNG

Ein in der Regel aus einer Vielzahl von Rohrbündeln 1.1 bis 1.n zusammen gesetzter Rohrbündel-Wärmeaustauscher 1 (**Figur 1**; siehe auch **DE-U-94 03 913**) besteht in seinem mittleren Teil aus einem einen Außenkanal 2* begrenzenden Außenmantel 2 mit einem, bezogen auf die Darstellungslage, linksseitig angeordneten festlagerseitigen Außenmantelflansch 2a und einem rechtsseitig angeordneten loslagerseitigen Außenmantelflansch 2b. An dem letzteren schließt sich ein von einem ersten Gehäuse 4.1 begrenzter erster Querkanal 4a* mit einem ersten Anschlussstutzen 4a und an den festlagerseitigen Außenmantelflansch 2a schließt sich ein von einem zweiten Gehäuse 4.2 begrenzter zweiter Querkanal 4b* mit einem zweiten Anschlussstutzen 4b an. Eine Anzahl von sich achsparallel zum Außenmantel 2 durch den Außenkanal 2* erstreckenden, gemeinsam einen Innenkanal 3* bildenden Innenrohre 3, beginnend mit vier und danach auch bis neunzehn ansteigend und ggf. auch mehr an der Zahl, sind endseitig jeweils in einer festlagerseitigen Rohrträgerplatte 7 bzw. einer loslagerseitigen Rohrträgerplatte 8 (beide auch als Rohrspiegelplatte bezeichnet) abgestützt und an ihrem Rohraußendurchmesser in dieser verschweißt, wobei diese Gesamtanordnung über eine nicht näher bezeichnete Öffnung am zweiten Gehäuse 4.2 in den Außenmantel 2 eingeführt und über einen festlagerseitigen Austauscherflansch 5 mit dem zweiten Gehäuse 4.2 unter Zwischenschaltung von jeweils einer Flachdichtung 9 zusammengespannt ist (Festlager 5, 7, 4.2).

Die beiden Gehäuse 4.1, 4.2 sind gegenüber dem jeweils benachbarten Außenmantelflansch 2b, 2a ebenfalls mit einer Flachdichtung 9 abgedichtet, wobei das rechtsseitig angeordnete erste Gehäuse 4.1 in Verbindung mit dem Außenmantel 2 über einen loslagerseitigen Austauscherflansch 6 unter Zwischenschaltung eines O-Ringes 10 gegen das linksseitig angeordnete Festlager 5, 7, 4.2 gepresst wird. Die loslagerseitige Rohrträgerplatte 8 greift durch eine nicht näher bezeichnete Bohrung im loslagerseitigen Austauscherflansch 6 hindurch und findet gegenüber letzterem ihre Abdichtung mittels des dynamisch beanspruchten O-Ringes 10, der darüber hinaus das erste Gehäuse 4.1 statisch gegen den loslagerseitigen Austauscherflansch 6 abdichtet. Letzterer und die loslagerseitige Rohrträgerplatte 8 bilden ein sog. Loslager 6, 8, welches die Längenänderungen der in der loslagerseitigen Rohrträgerplatte 8 eingeschweißten Innenrohre 3 infolge Temperaturänderung in beiden axialen Richtungen zulässt.

Abhängig von der Anordnung des jeweiligen Rohrbündels 1.1 bis 1.n im Rohrbündel-Wärmeaustauscher 1 und seiner jeweiligen Beschaltung können die Innenrohre 3, bezogen auf die Darstellungslage, entweder von links nach rechts oder umgekehrt von einem Produkt P durchströmt werden, wobei die mittlere Strömungsgeschwindigkeit im Innenrohr 3 und damit im Innenkanal 2* mit v gekennzeichnet ist. Die querschnittsmäßige Auslegung erfolgt in der Regel derart, dass diese mittlere Strömungsgeschwindigkeit v auch in einem Verbindungsbogen 11 vorliegt, der einerseits mit dem festlagerseitigen Austauscherflansch 5 und andererseits mittelbar mit einem mit der loslagerseitigen Rohrträgerplatte 8 fest verbundenen loslagerseitigen Anschlussstutzen 8d verbunden ist. Mit den beiden Verbindungsbogen 11 wird das in Rede stehende Rohrbündel 1.i mit dem jeweils benachbarten Rohrbündel 1.i+1 einerseits und 1.i-1 andererseits in Reihe geschaltet. Daher bildet einmal der festlagerseitige Austauscherflansch 5 einen Eintritt E für das Produkt P und der loslagerseitige Anschlussstutzen 8d beherbergt einen dazugehörenden Austritt A; beim jeweils benachbarten Rohrbündel 1.i+1 und 1.i-1 kehren sich diese Ein- und Austrittsverhältnisse jeweils entsprechend um.

Der festlagerseitige Austauscherflansch 5 weist eine erste Anschlussöffnung 5a auf, die einerseits einem Nenndurchmesser DN und damit einem Nenndurchtrittsquerschnitt $A_0$ des dort angeschlossenen Verbindungsbogens 11 entspricht und die andererseits so bemessen ist, dass dort die der mittleren Strömungsgeschwindigkeit v im Innenrohr 3 bzw. Innenkanal 3* entsprechende Strömungsgeschwindigkeit vorliegt. In gleicher Weise ist auch eine zweite Anschlussöffnung 8a in dem loslagerseitigen Anschlussstutzen 8d bemessen, wobei sich die jeweilige Anschlussöffnung 5a bzw. 8a auf einen jeweils erweiterten Durchtrittsquerschnitt 5c bzw. 8c im Bereich zur benachbarten Rohrträgerplatte 7 bzw. 8 durch einen konischen Übergang 5b bzw. 8b erweitert.

In Abhängigkeit von der Richtung der Strömungsgeschwindigkeit v im Innenrohr 3 bzw. Innenkanal 3* strömt das zu behandelnde Produkt P entweder über die erste Anschlussöffnung 5a oder die zweite Anschlussöffnung 8a dem Rohrbündel 1.1 bis 1.n zu, sodass entweder die festlagerseitige Rohrträgerplatte 7 oder die loslagerseitige Rohrträgerplatte 8 angeströmt wird. Da in jedem Falle ein Wärmeaustausch zwischen Produkt P in den Innenrohren 3 bzw. den Innenkanälen 3* und einem Wärmeträgermedium W im Außenmantel 2 bzw. in den Außenkanälen 2* im Gegenstrom zu erfolgen hat, strömt dieses Wärmeträgermedium W entweder dem ersten Anschlussstutzen 4a oder aber dem zweiten Anschlussstutzen 4b mit einer Strömungsgeschwindigkeit c zu. Für den Fall, dass das Produkt P dem Rohrbündel 1 über die erste Anschlussöffnung 5a zuströmt, so würde hier die Eintrittstemperatur des Produktes $\vartheta_E$ vorliegen. Dementsprechend würde das Wärmeträgermedium W den Außenmantel 2 bzw. die Außenkanäle 2* im Gegenstrom über den zweiten Anschlussstutzen 4b mit einer Austrittstemperatur des Wärmeträgermediums $\vartheta_A$ verlassen. Die im Bereich des zweiten Anschlussstutzens 4b vorliegende Temperaturdifferenz am Produkteintritt $\Delta\vartheta = \vartheta_A - \vartheta_E$ stellt in der Praxis einen zuverlässigen Indikator für die Güte des Wärmeaustauschs in den Rohrbündeln 1.1 bis 1.n dar.

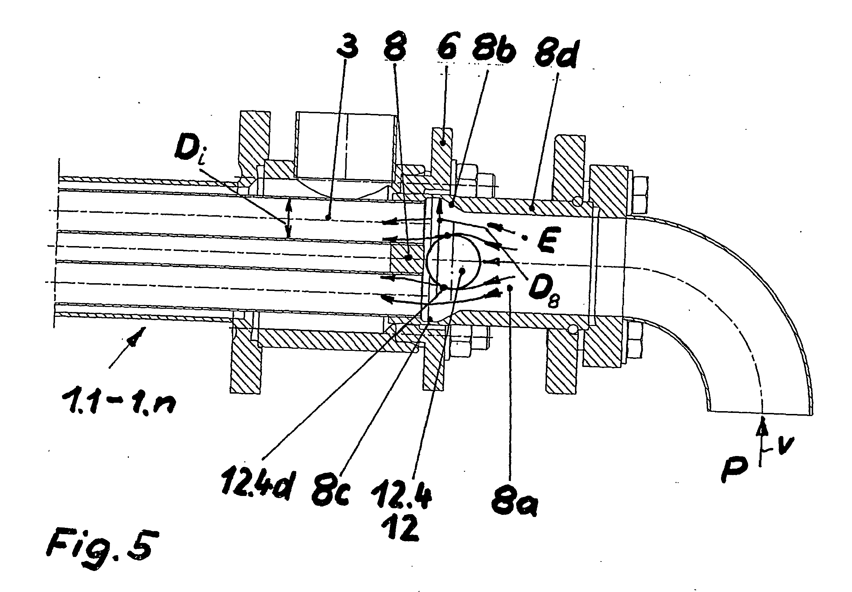

Bei Rohrbündel-Wärmeaustauschern nach dem Stand der Technik finden sich Ablagerungen von Fasern und Pulpe F vor allem an den jeweils angeströmten Rohrträgerplatten 7, 8 im Bereich der Stege S (**Figur 9**) zwischen benachbarten Innenrohren 3 mit ihrem durchströmten Rohrinnendurchmesser $D_i$. Die Darstellung zeigt den gesamten angeströmten Bereich der Rohrträgerplatte 7, 8 mit einem angeströmten äußeren Durchmesser $D_7$, der auch einem größten Durchmesser $D_5$ des ersten erweiterten Durchtrittsquerschnitts 5c im festlagerseitigen Austauscherflansch 5 (**s. Figur 2**) bzw. einem größten Durchmesser $D_8$ des zweiten erweiterten Durchtrittsquerschnitts 8c im loslagerseitigen Anschlussstutzen 8d (**s. Figur 5**) entspricht.

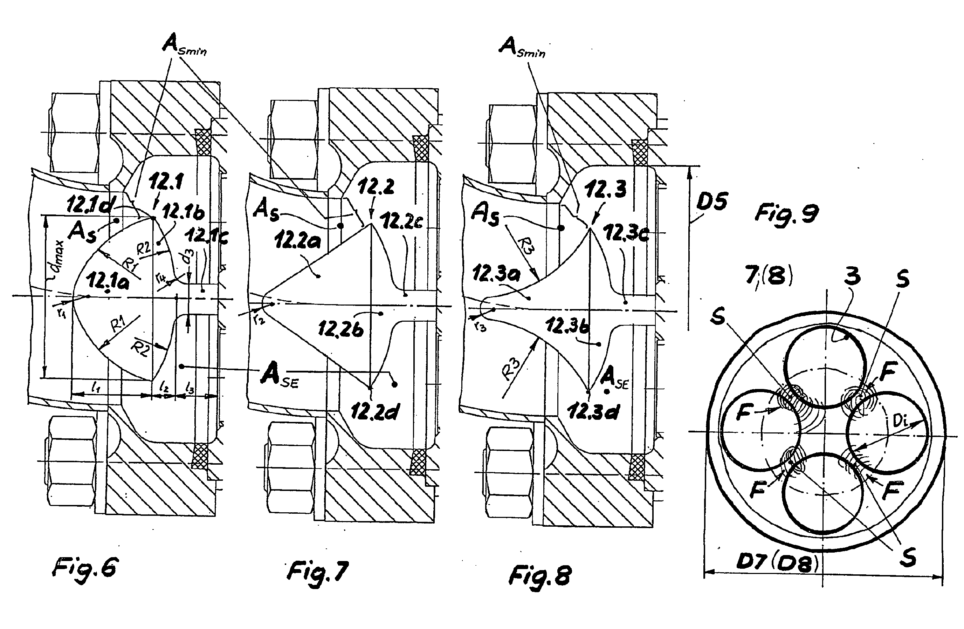

Ein Verdrängerkörper 12 (**Figur 2** und **Figur 6**), der in einer bevorzugten ersten Ausführungsform 12.1 in einem axialsymmetrischen vorderen Teil 12a bzw. 12.1 a pilzförmig konvex gekrümmt ausgebildet ist, ist über einen an einem axialsymmetrischen hinteren Teil 12b bzw. 12.1 b angeordneten Schaft 12c bzw. 12.1 c konzentrisch mit dem Zentrum der festlagerseitigen Rohrträgerplatte 7 stoffschlüssig verbunden. Der vordere und der hintere Teil 12.a bzw. 12.1 a und 12b bzw. 12.1 b bilden an ihrem Verbindungsquerschnitt einen größten gemeinsamen Außendurchmesser $d_{max}$ in Form einer definierten Strömungsabrissstelle 12d bzw. 12.1d (**Fig. 6**) aus.

Der Verdrängerkörper 12 bzw. 12.1 ist im Anströmbereich der festlagerseitigen Rohrträgerplatte 7 angeordnet, der außenseits von dem ersten erweiterten Durchtrittsquerschnitt 5c begrenzt ist, und er teilt das über den Verbindungsbogen 11 mit der mittleren Strömungsgeschwindigkeit v zum Innenkanal 3* strömende Produkt P axialsymmetrisch über den gesamten Umfang auf und lenkt es nach außen um. Dabei wird die Strömung in einem zwischen dem Verdrängerkörper 12 bzw. 12.1 und einer Innenkontur des festlagerseitigen Austauscherflansches 5 düsenartig verengten Ringspaltquerschnitt $A_S$ beschleunigt und erreicht an dessen engster Stelle, einem minimalen Ringspaltquerschnitt $A_{Smin}$, eine mittlere maximale Strömungsgeschwindigkeit $V_{max}$. Die Strömungsabrissstelle (hier Strömungsabrisskante) 12d bzw. 12.1 d ist dabei, in Strömungsrichtung gesehen, hinter der Stelle des minimalen Ringspaltquerschnittes $A_{Smin}$ positioniert.

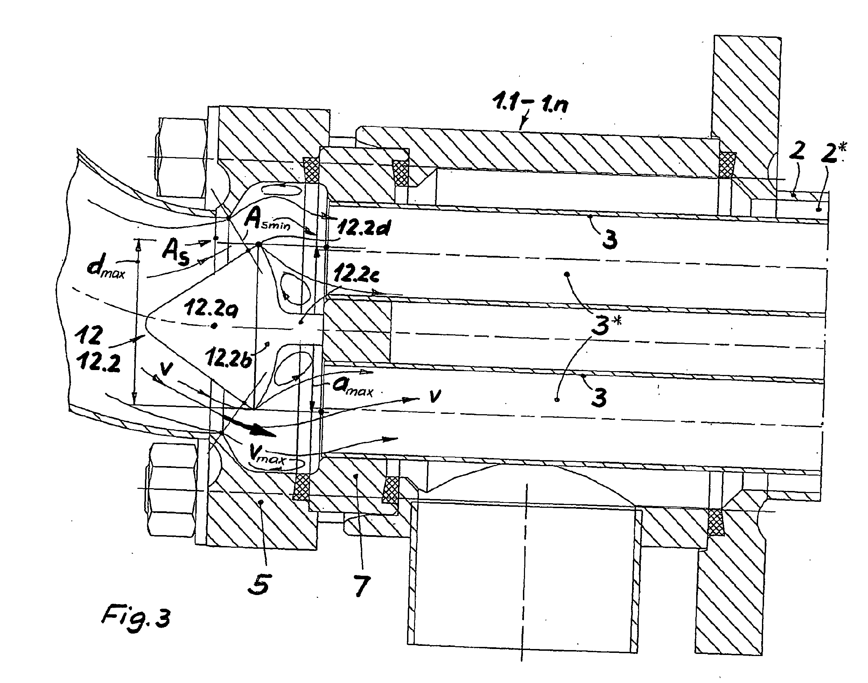

Der Außendurchmesser $d_{max}$ des Verdrängerkörpers 12 bzw. 12.1 ist derart bemessen, dass ein durch einen Rohrinnendurchmesser $D_i$ gebildeter Durchtrittsquerschnitt der am äußeren Rand der Rohrträgerplatte 7 gelegenen Innenrohre 3 jeweils etwa zur Hälfte durch eine in Richtung der Rohrträgerplatte 7 projizierte Anströmfläche $a_{max}$ des Verdrängerkörpers 12 bzw. 12.1 abgedeckt ist. Im vorliegenden Falle handelt es sich um ein sog. 4er-Bündel von Innenrohren 3, wie es in **Figur 9** eindeutiger dargestellt ist. Zur Verdeutlichung der projizierten Anströmfläche $a_{max}$ des Verdrängerkörpers 12 wird auf **Figur 3** verwiesen. Bei Rohrbündeln mit mehr als vier Innenrohren 3 gilt die vorstehende Bemessungsvorschrift hinsichtlich des abgedeckten Bereiches uneingeschränkt; sie bezieht sich jeweils auf die am äußeren Rand der Rohrträgerplatte 7 gelegenen, einen Rohrkranz bildenden Innenrohre 3.

Aus den vorstehenden Ausführungen wird deutlich, dass die Strömung hinter dem Verdrängerkörper 12 bzw. 12.1 zum Zentrum der Rohrträgerplatte 7 hin umgelenkt wird, wodurch eine möglichst gleichmäßige Durchströmung aller Innenrohre 3 bzw. Innenkanäle 3* erfolgt. Darüber hinaus erweitert sich hinter dem minimalen Ringspaltquerschnitt $A_{Smin}$ der Durchtrittsquerschnitt für die Strömung. Die derart gekrümmte und verzögerte Strömung muss zwangsläufig in diesem Bereich ablösen. Durch die Strömungsabrissstelle 12d bzw. 12.1d erfolgt die Ablösung planmäßig an dieser eindeutig definierten Stelle; ansonsten würde die Strömung in Abhängigkeit von der jeweiligen Turbulenz erst im Bereich des hinteren Teils 12b bzw. 12.1 b, und zwar an einer nicht vorhersehbaren Stelle, ablösen. Die geschilderte Strömungsbewegung hinter dem Verdrängerkörper 12 bzw. 12.1 führt dort nach den strömungsmechanischen Gesetzmäßigkeiten zu einer Sekundärströmung, auf der die gewünschte Wirkung, nämlich die Verhinderung von Ablagerungen auf der angeströmten Rohrträgerplatte 7, 8, zum Teil beruht.

Zum anderen Teil beruht die positiver Wirkung des Verdrängerkörpers 12 bzw. 12.1 auf der Beschleunigung der Strömung im Ringspaltquerschnitt $A_S$, da dadurch offensichtlich eine Ausrichtung der Fasern und Pulpe F in Richtung der Stromlinien erfolgt und somit ein "Einfädeln" dieser Produktbestandteile in den Rohrinnendurchmesser $D_i$ der In-nenrohre 3 erleichtert wird.

Die **Figuren 6** bis **8** verdeutlichen, dass sowohl beim ersten Verdrängerkörper 12.1 als auch bei den beiden anderen vorgeschlagenen Ausführungsformen, einem zweiten Verdrängerkörper 12.2 (**Figur 7**) und einem dritten Verdrängerkörper 12.3 (**Figur 8**), der hintere Teil 12.2b bzw.12.3b in Verbindung mit dem jeweiligen Schaft 12.2c bzw. 12.3c kongruent zum hinteren Teil 12.1 b mit dem Schaft 12.1 c des ersten Verdrängerkörpers 12.1 ausgeführt sind. Dabei ist eine zweite axiale Länge $l_2$ des hinteren Teils 12.1 b, 12.2b, 12.3b im Vergleich zu einer ersten axialen Länge $l_1$ des vorderen Teils 12.1a, 12.2a, 12.3a kleiner, vorzugsweise mit $l_2 \leq 0,5\, l_1$, ausgeführt (**Fig. 6**). Weiterhin wird deutlich, dass der hintere Teil 12.1 b, 12.2b, 12.3b durch eine konvexe Außenkontur mit einem zweiten Krümmungsradius $R_2$ berandet ist. Der hintere Teil 12.1 b, 12.2b, 12.3b besitzt einen Schaft 12.1 c, 12.2c, 12.3c mit einer dritten axialen Länge $l_3$ und einem gegenüber dem Außendurchmesser $d_{max}$ des Verdrängerkörpers 12.1 bis 12.3 deutlich reduzierten Schaft-durchmesser $d_3$, der zum zweiten Krümmungsradius $R_2$ hin mit eine Schaftausrundung $r_4$ versehen ist und über den eine stoff-, form- und/oder kraftschlüssige Verbindung mit der Rohrträgerplatte 7, 8 erfolgt. Hinsichtlich der stoffschlüssigen Verbindung kommt in erster Linie das Schweißen in Frage. Eine Alternative hierzu stellt eine Verschraubung des Verdrängerkörpers 12 mit der Rohrträgerplatte 7, 8 dar. Dabei wird der Schaft 12c mit einem Außengewinde versehen und in ein Gewindegrundloch innerhalb der Rohrträgerplatte 7, 8 eingeschraubt. Aus hygienischen Gründen ist in diesem Falle ein aus der Rohrträgerplatte 7, 8 herausragender Teil des Schaftes 12c gegenüber letzterer mittels einer Dichtung, vorzugsweise einem O-Ring, abzudichten.

Der jeweilige vordere Teil 12.1 a, 12.2a,12.3a der drei Verdrängerkörper 12.1, 12.2, 12.3 ist signifikant unterschiedlich ausgebildet (**Figuren 6** bis **8**). Während der erste Verdrängerkörper 12.1 an seiner Anströmfläche pilzförmig konvex gekrümmt ausgeführt ist, wobei zwei erste Krümmungsradien $R_1$ am vorderen Ende mit einer ersten Spitzen-abrundung $r_1$ verbunden sind (**Figur 6**), besitzt der zweite Verdrängerkörper 12.2 in seinem vorderen Teil 12.2a die Form eines geraden Kreiskegels mit einer zweiten Spitzenabrundung $r_2$ (**Figur 7**). Beim dritten Verdrängerkörper 12.3 ist dessen vorderer Teil 12.3a konisch und mit einer konkav gekrümmten Mantelfläche ausgebildet, wobei zwei dritte

Krümmungsradien $R_3$ am vorderen Ende mit einer dritten Spitzenabrundung $r_3$ verbunden sind (**Figur 8**).

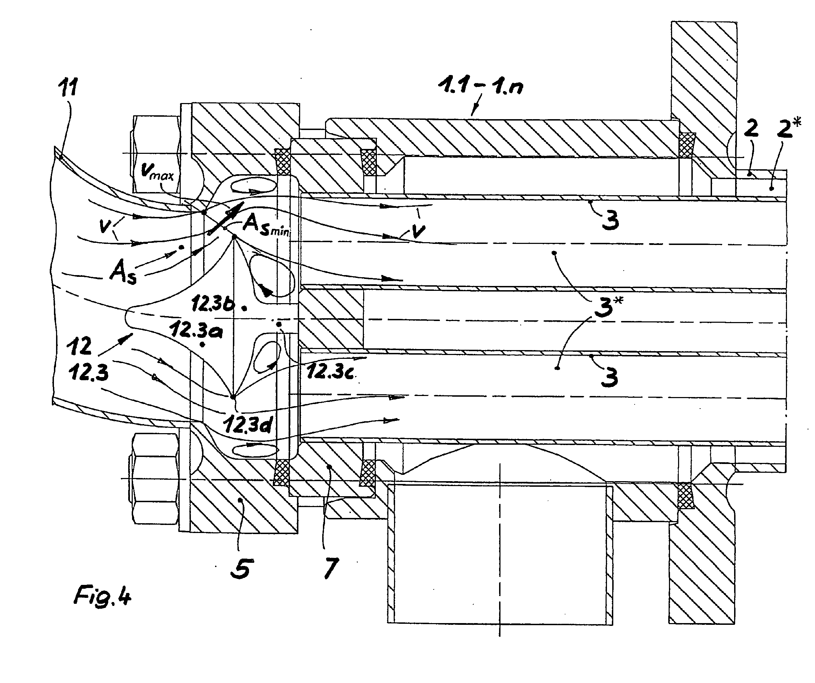

Die **Figuren 3** und **4** zeigen den zweiten Verdrängerkörper 12.2 bzw. den dritten Verdrängerkörper 12.3 in ihrem jeweiligen angedeuteten Strömungsumfeld. Die Ausführungen im Zusammenhang mit dem ersten Verdrängerkörper 12.1 in Verbindung mit **Figur 2** gelten sinngemäß.

Bei bereits ausgeführten und im Betrieb befindlichen Rohrbündel-Wärmeaustauschern ist die Zugänglichkeit zur loslagerseitigen Rohrträgerplatte 8 zum Zwecke der nachträglichen Montage des Verdrängerkörpers 12 zumindest erheblich erschwert. Für diesen Fall ist vorgesehen, dass der Verdrängerkörper 12 als Kugel 12.4 ausgebildet ist (**Figur 5**), die im erweiterten Durchtrittsquerschnitt 8c mit dem Durchmesser $D_8$ frei beweglich positioniert ist. Eine umströmte Kugel 12.4 besitzt bekanntlich keine definierte Strömungsabrissstelle bzw. -kante, sondern, abhängig von der Turbulenz der wandnahen Grenzschicht, eine undefinierte Strömungsabrissstelle 12.4d, die jedenfalls, in Strömungsrichtung gesehen, hinter der engsten Stelle des Ringspaltquerschnittes, den die Kugel 12.4 mit dem zweiten konischen Übergang 8b bildet, positioniert ist. Bei der Anströmung der loslagerseitigen Rohrträgerplatte 8 wird die Kugel 12.4 in deren Zentrum durch die Strömung fixiert.

Grundsätzlich ist es möglich, den als Kugel 12.4 ausgebildeten Verdrängerkörper 12 auch im Anströmbereich der festlagerseitigen Rohrträgerplatte 7 anzuordnen. Diese Möglichkeit wird man dann nutzen, wenn der Montageaufwand zur Befestigung der Verdrängungskörper 12.1 bis 12.3 an der Rohrträgerplatte 7, 8 nicht betrieben werden soll oder kann.

Als Materialien für die Kugel 12.4 haben sich neben Polytetrafluorethylen (PTFE) vor allem teilkristalline Hochleistungskunststoffe, wie beispielsweise Polyetheretherketon (PEEK), oder amorphe Thermoplaste, wie beispielsweise Polyphenylsulfon (PPSU), bewährt.

## Patentansprüche

**1.** Rohrbündel-Wärmeaustauscher (1), insbesondere für die Nahrungsmittel- und Getränkeindustrie, mit einem von einem Außenmantel (2) umgebenen Außenkanal (2*) für ein Wärmeträgermedium (W), mit einer Anzahl von sich achsparallel zum Außenmantel (2) durch den Außenkanal (2*) erstreckenden, gemeinsam einen Innenkanal (3*) bildenden, endseitig jeweils in der Rohrträgerplatte (7, 8) abgestützten Innenrohren (3), mit einem für alle Innenrohre (3) gemeinsamen, in einem festlagerseitigen Austauscherflansch (5) ausgebildeten Eintritt (E) oder Austritt (A) und einem gemeinsamen, in einem loslagerseitigen Anschlussstutzen (8d) ausgebildeten Austritt (A) bzw. Eintritt (E) für ein Produkt (P), und mit wenigstens einem die Strömung im Anströmbereich der Rohrträgerplatte (7, 8) beeinflussenden Verdrängerkörper (12), **dadurch gekennzeichnet,**

- **dass** im Anströmbereich der jeweiligen Rohrträgerplatte (7, 8),
- der außenseits von einem ersten bzw. zweiten erweiterten Durchtrittsquerschnitt (5c, 8c) innerhalb des Austauscherflansches (5) bzw. des Anschlussstutzens (8d) begrenzt ist,
- und konzentrisch zur Rohrträgerplatte (7, 8) der Verdrängerkörper (12; 12.1, 12.2, 12.3) über einen an einem axialsymmetrischen hinteren Teil (12b) angeordneten Schaft (12c) angeordnet ist,
- **dass** der Verdrängerkörpers (12; 12.1, 12.2, 12.3) aus einem axialsymmetrischen vorderen Teil und dem axialsymmetrischen hinteren Teil gebildet wird, die an ihrem Verbindungsquerschnitt den größten gemeinsamen Außendurchmesser ($d_{max}$) ausbilden,
- **dass** der Verdrängerkörper (12; 12.1, 12.2, 12.3) die Strömung zum Innenkanal (3*) axialsymmetrisch teilt,
- nach außen umlenkt und dabei in einem zwischen dem Verdrängerkörper (12; 12.1, 12.2, 12.3) und einer Innenkontur des Austauscherflansches (5) bzw. Anschlussstutzens (8d) düsenartig verengten Ringspaltquerschnitt ($A_S$) beschleunigt und
- nachfolgend zusammen mit dem erweiterten Durchtrittsquerschnitt (5c, 8c) einen sich erweiternden Ringspaltquerschnitt ($A_{SE}$) bildet.

**2.** Rohrbündel-Wärmeaustauscher nach Anspruch 1,
**dadurch gekennzeichnet,**
**dass** der Verdrängerkörper (12; 12.1, 12.2, 12.3) in dem erweiterten Durchtrittsquerschnitt (5c, 8c) eine Strömungsabrissstelle (12d; 12.1d, 12.2d, 12.3d) besitzt.

**3.** Rohrbündel-Wärmeaustauscher nach Anspruch 2,
**dadurch gekennzeichnet,**
**dass** die Strömungsabrissstelle (12d; 12.1d, 12.2d, 12.3d) an einer engsten Stelle (minimaler Rinspaltquerschnitt $A_{Smin}$) des Ringspaltquerschnittes ($A_S$) positioniert ist.

4. Rohrbündel-Wärmeaustauscher nach Anspruch 2,
**dadurch gekennzeichnet,**
**dass** die Strömungsabrissstelle (12d; 12.1 d, 12.2d, 12.3d), in Strömungsrichtung gesehen, hinter einer engsten Stelle (minimaler Rinspaltquerschnitt $A_{Smin}$) des Ringspaltquerschnittes ($A_S$) positioniert ist.

5. Rohrbündel-Wärmeaustauscher nach einem der Ansprüche 1 bis 4,
**dadurch gekennzeichnet,**
**dass** der Verdrängerkörper (12; 12.1, 12.2, 12.3) mit der Rohrträgerplatte (7, 8) fest verbunden ist.

6. Rohrbündel-Wärmeaustauscher nach einem der Ansprüche 1 bis 5,
**dadurch gekennzeichnet,**
**dass** ein Außendurchmesser ($d_{max}$) des Verdrängerkörpers (12; 12.1, 12.2, 12.3) derart bemessen ist, dass ein durch einen jeweiligen Rohrinnendurchmesser ($D_i$) gebildeter Durchtrittsquerschnitt der am äußeren Rand der Rohrträgerplatte (7, 8) gelegenen Innenrohre (3) jeweils etwa zur Hälfte durch eine in Richtung der Rohrträgerplatte (7, 8) projizierte Anströmfläche ($a_{max}$) des Verdrängerkörpers (12; 12.1, 12.2, 12.3) abgedeckt ist.

7. Rohrbündel-Wärmeaustauscher nach Anspruch 5 oder 6,
**dadurch gekennzeichnet,**
**dass** der größte gemeinsame Außendurchmesser ($d_{max}$) am Verbindungsquerschnitt des axialsymmetrischen vorderen Teils (12a; 12.1 a, 12.2a, 12.3a) mit dem axialsymmetrischen hinteren Teil (12b; 12.1 b, 12.2b, 12.3b) in Form einer definierten Strömungsabrisskante (12d; 12.1d, 12.2d, 12.3d) ausgebildet ist.

8. Rohrbündel-Wärmeaustauscher nach Anspruch 7,
**dadurch gekennzeichnet,**
**dass** eine zweite axiale Länge ($l_2$) des hinteren Teils (12b; 12.1 b, 12.2b, 12.3b) im Vergleich zu einer ersten axialen Länge ($l_1$) des vorderen Teils (12a; 12.1 ä, 12.2a, 12.3a) kleiner, vorzugsweise mit $l_2 \leq 0,5\, l_1$, ausgeführt ist.

9. Rohrbündel-Wärmeaustauscher nach Anspruch 7 oder 8,
**dadurch gekennzeichnet,**
**dass** der hintere Teil (12b; 12.1b, 12.2b, 12.3b) durch eine konvexe Außenkontur mit einem zweiten Krümmungsradius ($R_2$) berandet ist.

10. Rohrbündel-Wärmeaustauscher nach einem der Ansprüche 7 bis 9,
**dadurch gekennzeichnet,**
**dass** der hintere Teil (12b; 12.1b, 12.2b, 12.3b) einen Schaft (12c; 12.1c, 12.2c, 12.3c) mit einer dritten axialen Länge ($l_3$) und einem gegenüber dem Außendurchmesser ($d_{max}$) des Verdrängerkörpers deutlich reduzierten Schaftdurchmesser ($d_3$) besitzt, der eine Abrundung zum zweiten Krümmungsradius ($R_2$) mit einer Schaftausrundung ($r_4$) aufweist und über den eine stoff-, form- und/oder kraftschlüssige Verbindung mit der Rohrträgerplatte (7, 8) erfolgt.

11. Rohrbündel-Wärmeaustauscher nach einem der Ansprüche 7 bis 10,
**dadurch gekennzeichnet,**
**dass** ein erster Verdrängerkörper (12.1) vorgesehen ist, dessen vorderer Teil (12.1 a) pilzförmig konvex gekrümmt ausgebildet ist, wobei zwei erste Krümmungsradien ($R_1$) am vorderen Ende mit einer ersten Spitzenabrundung ($r_1$) verbunden sind.

12. Rohrbündel-Wärmeaustauscher nach einem der Ansprüche 7 bis 10,
**dadurch gekennzeichnet,**
**dass** ein zweiter Verdrängerkörper (12.2) vorgesehen ist, dessen vorderer Teil (12.2a) als gerader Kreiskegel mit einer zweiten Spitzenabrundung ($r_2$) ausgeführt ist.

13. Rohrbündel-Wärmeaustauscher nach einem der Ansprüche 7 bis 10,
**dadurch gekennzeichnet,**
**dass** ein dritter Verdrängerkörper (12.3) vorgesehen ist, dessen vorderer Teil (12.3a) konisch und mit einer konkav gekrümmten Mantelfläche ausgebildet ist, wobei zwei dritte Krümmungsradien ($R_3$) am vorderen Ende mit einer dritten Spitzenabrundung ($r_3$) verbunden sind.

14. Rohrbündel-Wärmeaustauscher (1), insbesondere für die Nahrungsmittel- und Getränkeindustrie, mit einem von einem Außenmantel (2) umgebenen Außenkanal (2*) für ein Wärmeträgermedium (W), mit einer Anzahl von sich achsparallel zum Außenmantel (2) durch den Außenkanal (2*) erstreckenden, gemeinsam einen Innenkanal (3*) bildenden, endseitig jeweils in der Rohrträgerplatte (7, 8) abgestützten Innenrohren (3), mit einem für alle Innenrohre (3) gemeinsamen, in einem festlagerseitigen Austauscherflansch (5) ausgebildeten Eintritt (E) oder Austritt (A) und einem gemeinsamen, in einem loslagerseitigen Anschlussstutzens (8d) ausgebildeten Austritt (A) bzw. Eintritt (E) für ein Produkt (P), und mit wenigstens einem die Strömung im Anströmbereich der Rohrträgerplatte (7, 8) beeinflussenden Verdrängerkör per (12),
**dadurch gekennzeichnet,**

> • **dass** im Anströmbereich der jeweiligen Rohrträgerplatte (7, 8) der Verdrängerkörper (12) angeordnet ist,
> • **dass** der Anströmbereich außenseits von einem ersten bzw. zweiten erweiterten Durchtrittsquerschnitt (5c, 8c) innerhalb des Austauscherflansches (5) bzw. des Anschlussstutzens (8d) begrenzt ist,
> • **dass** der Verdrängerkörper (12) als Kugel (12.4) ausgebildet ist, die im erweiterten Durchtrittsquerschnitt (5c, 8c) frei beweglich positioniert ist,
> • **dass** die Kugel (12.4) aus Polytretrafluorethylen (PTFE) oder aus einem teilkristallinen Hochleistungskunststoff, wie beispielsweise Polyetheretherketon (PEEK), oder einer amorphen Thermoplaste, wie beispielsweise Polyphenylsulfon (PPSU), hergestellt ist,
> • **dass** die Kurgel (12.4) die Strömung zum Innenkanal (3*) axialsymmetrisch teilt,
> • nach außen umlenkt und dabei in einem zwischen der Kugel (12.4) und einer Innenkontur des Austauscherflansches (5) bzw. Anschlussstutzens (8d) düsenartig verengten Ringspaltquerschnitt ($A_S$) beschleunigt und
> • nachfolgend zusammen mit dem erweiterten Durchtrittsquerschnitt (5c, 8c) einen sich erweiternden Ringspaltquerschnitt ($A_{SE}$) bildet.

**15.** Rohrbündel-Wärmeaustauscher nach einem der Ansprüche 1 bis 14,
**dadurch gekennzeichnet,**
**dass** im Zentrum des Außenmantels (2), unabhängig von der Anzahl der Innenrohre (3), kein Innenrohr (3) angeordnet ist.

**16.** Rohrbündel-Wärmeaustauscher nach einem der Ansprüche 1 bis 15,
**dadurch gekennzeichnet,**
**dass** das Verhältnis eines Nenndurchtrittsquerschnitts $A_o$ eines Verbindungsbogens (11) zum minimalen Ringspaltquerschnitt ($A_{Smin}$) mit $1{,}5 \leq \dfrac{A_0}{A_{S\,min}} \leq 2{,}5$, insbesondere mit $\dfrac{A_0}{A_{S\,min}} = 2$, ausgeführt ist.

**Claims**

**1.** A tube bundle heat exchanger (1), for the food and beverage industry in particular, with an outer channel (2*) for a heat transfer medium (W), surrounded by an outer shell (2), with a number of inner tubes (3) which extend axis parallel to the outer shell (2) through the outer channel (2*), forming together an inner channel (3*) and being each one at its end side supported in the tube support plate (7, 8), with an inlet (E) or outlet (A), common for all inner tubes (3) and formed in an exchanger flange (5) on the fixed bearing side, and a common outlet (A) and inlet (E), respectively, for a product (P), formed in a stub (8d) on the movable bearing side, and with at least one displacer (12), influencing the flow in the region of approach of the tube support plate (7, 8), **characterized in**

> • **that** in the region of approach of the respective tube support plate (7, 8),
> • which is limited on the outer side by a first and second enlarged cross section of passage (5c, 8c), respectively, inside the exchanger flange (5) and the stub (8d), respectively,
> • and concentric to the tube support plate (7, 8), the displacer (12; 12.1, 12.2, 12.3) is arranged via a shaft (12c), which is itself arranged on an axisymmetric rear part (12b),
> • **that** the displacer (12; 12.1, 12.2, 12.3) is formed by an axisymmetric front part and an axisymmetric rear part, which form the greatest common outside diameter ($d_{max}$) on their connection cross section,
> • **that** the displacer (12; 12.1, 12.2, 12.3) axisymmetrically divides the flow to the inner channel (3*)
> • deflects its towards the outside and while doing so accelerates it in an annular gap cross section ($A_S$), which is nozzle-like narrowed between the displacer (12; 12.1, 12.2, 12.3) and an inner contour of the exchanger flange (5) or stub (8d), respectively, and
> • subsequently forms an enlarging annular gap cross section ($A_{SE}$), together with the enlarged cross section of passage (5c, 8c).

2. A tube bundle heat exchanger according to claim 1,
   **characterized in**
   **that** the displacer (12; 12.1, 12.2, 12.3) has a flow separation position (12d; 12.1d, 12.2d, 12.3d) in the enlarged cross section of passage (5c, 8c).

3. A tube bundle heat exchanger according to claim 2,
   **characterized in**
   **that** the flow separation position (12d; 12.1d, 12.2d, 12.3d) is positioned on a narrowest position (minimal annular gap cross section ($A_{Smin}$)) of the annular gap cross section ($A_S$).

4. A tube bundle heat exchanger according to claim 2,
   **characterized in**
   **that** when seen in the flow direction, the flow separation position (12d; 12.1d, 12.2d, 12.3d) is positioned behind a narrowest position (minimal annular gap cross section ($A_{Smin}$)) of the annular gap cross section ($A_S$)

5. A tube bundle heat exchanger according to any one of claims 1 to 4,
   **characterized in**
   **that** the displacer (12; 12.1, 12.2, 12.3) is fixedly connected with the tube support plate (7, 8).

6. A tube bundle heat exchanger according to any one of claims 1 to 5,
   **characterized in**
   **that** an outside diameter ($d_{max}$) of the displacer (12; 12.1, 12.2, 12.3) is dimensioned such that a cross section of passage of the inner tubes (3), which are situated on the outer edge of the tube support plate (7, 8), and which is formed by a respective tube inside diameter, is covered each about half by a face area ($a_{max}$), projected in the direction of the tube support plate (7, 8), of the displacer (12; 12.1, 12.2, 12.3).

7. A tube bundle heat exchanger according to claim 5 or 6,
   **characterized in**
   **that** the greatest common outside diameter ($d_{max}$) is formed in the form of a defined flow separation edge (12d; 12.1d, 12.2d, 12.3d) at the connection cross section of the axisymmetric front part (12a; 12.1a, 12.2a, 12.3a) with the axisymmetric rear part (12b; 12.1b, 12.2b, 12.3b).

8. A tube bundle heat exchanger according to claim 7,
   **characterized in**
   **that** a second axial length ($l_2$) of the rear part (12b; 12.1b, 12.2b, 12.3b) is realised as being smaller when compared with a first axial length ($l_1$) of the front part (12a; 12.1a, 12.2a, 12.3a), preferably with $l_2 \leq 0,51_1$.

9. A tube bundle heat exchanger according to claim 7 or 8,
   **characterized in**
   **that** the rear part (12b; 12.1b, 12.2b, 12.3b) is delimited by a convex outer contour with a second radius of curvature ($R_2$).

10. A tube bundle heat exchanger according to any one of claims 7 to 9,
    **characterized in**
    **that** the rear part (12b; 12.1b, 12.2b, 12.3b) has a shaft (12c; 12.1c, 12.2c, 12.3c) with a third axial length ($l_3$) and a shaft diameter ($d_3$) which is significantly reduced with respect to the outside diameter ($d_{max}$) of the displacer, and which has a rounding towards the second radius of curvature ($R_2$) with a shaft fillet ($r_4$) and through which a self substance, positive and/or non-positive connection with the tube support plate (7, 8) takes place.

11. A tube bundle heat exchanger according to any one of claims 7 to 10,
    **characterized in**
    **that** a first displacer (12.1) is provided, the front part (12.1a) of which is realised as being mushroom-like convexly curved, wherein two first radii of curvature ($R_1$) are connected with a first point rounding ($r_1$) on the front end.

12. A tube bundle heat exchanger according to any one of claims 7 to 10,
    **characterized in**

**that** a second displacer (12.2) is provided, the front part (12.2a) of which is realised as a straight circular cone with a second point rounding ($r_2$).

**13.** A tube bundle heat exchanger according to any one of claims 7 to 10,
**characterized in**
**that** a third displacer (12.3) is provided, the front part (12.3a) of which is realised as being conical and having a concavely curved surface area, wherein two third radii of curvature ($R_3$) are connected with a third point rounding ($r_3$) on the front end.

**14.** A tube bundle heat exchanger (1), for the food and beverage industry in particular, with an outer channel (2*) for a heat transfer medium (W), surrounded by an outer shell (2), with a number of inner tubes (3) which extend axis parallel to the outer shell (2) through the outer channel (2*), forming together an inner channel (3*) and being each one at its end side supported in the tube support plate (7, 8), with an inlet (E) or outlet (A), common for all inner tubes (3) and formed in an exchanger flange (5) on the fixed bearing side, and a common outlet (A) and inlet (E), respectively, for a product (P), formed in a stub (8d) on the movable bearing side, and with at least one displacer (12), influencing the flow in the region of approach of the tube support plate (7, 8), **characterized in**

- **that** the displacer (12) is arranged in the region of approach of the respective tube support plate (7, 8),
- **that** this region of flow is limited on the outer side by a first and second enlarged cross section of passage (5c, 8c), respectively, inside the exchanger flange (5) and the stub (8d), respectively,
- **that** the displacer (12) is realised as a sphere (12.4), which is positioned as being freely movable in the enlarged cross section of passage (5c, 8c),
- **that** the sphere (12.4) is made from polytetrafluorethylene (PTFE) or from a partly crystalline high-performance plastics, like polyetheretherketone (PEEK), for instance, or an amorphous thermoplastics, like polyphenylsulfone (PPSU), for instance,
- **that** the sphere (12.4) axisymmetrically divides the flow to the inner channel (3*),
- deflects it towards the outside and while doing so accelerates it in an annular gap cross section ($A_S$), which is nozzle-like narrowed between the sphere (12.4) and an inner contour of the exchanger flange (5) or stub (8d), respectively, and
- subsequently forms an enlarging annular gap cross section ($A_{SE}$), together with the enlarged cross section of passage (5c, 8c).

**15.** A tube bundle heat exchanger according to any one of claims 1 to 14,
**characterized in**
**that** no inner tube (3) is arranged in the centre of the outer shell (2), irrespective of the number of inner tubes (3).

**16.** A tube bundle heat exchanger according to any one of claims 1 to 15,
**characterized in**
**that** the ratio of the nominal cross section of passage $A_o$ of a connection bow (11) to the minimal annular gap cross section ($A_{Smin}$) is realised as being $1{,}5 \leq \dfrac{A_0}{A_{S\,min}} \leq 2{,}5$, in particular $\dfrac{A_0}{A_{S\,min}} = 2.$

## Revendications

**1.** Echangeur thermique à faisceau tubulaire (1), en particulier pour l'industrie alimentaire et des boissons, avec un canal extérieur (2*) entouré d'une enveloppe extérieure (2) pour un milieu caloporteur (W), avec une quantité de tubes intérieurs (3) formant ensemble un canal intérieur (3*), s'étendant de façon parallèle à l'axe de l'enveloppe extérieure (2) à travers le canal extérieur (2*), respectivement supportés côté extrémité dans la plaque de support de tube (7, 8), avec une entrée (E) ou sortie (A) commune à tous les tubes intérieurs (3), formée dans une bride d'échangeur (5) située côté palier fixe, et une sortie (A) et/ou entrée (E) commune destinée à un produit (P), formée dans un raccord (8d) situé côté palier libre, et avec au moins un corps de refoulement (12) influençant l'écoulement dans la zone d'afflux de la plaque de support de tube (7, 8), **caractérisé en ce**

- **que** dans la zone d'afflux de la plaque de support de tube respective (7, 8)
- ladite zone étant limitée côté extérieur par une première et/ou une deuxième section transversale de passage (5c, 8c) élargie à l'intérieur de la bride d'échangeur (5) et/ou du raccord (8d),

• et de manière concentrique par rapport à la plaque de support de tube (7, 8) est disposé le corps de refoulement (12; 12.1, 12.2, 12.3) sur une tige (12c) disposée au niveau d'une partie arrière (12b) à symétrie axiale,

• **que** le corps de refoulement (12; 12.1, 12.2, 12.3) est constitué d'une partie avant à symétrie axiale et de la partie arrière à symétrie axiale, lesquelles forment au niveau de leur section transversale de liaison le plus grand diamètre extérieur commun ($d_{max}$),

• **que** le corps de refoulement (12; 12.1, 12.2, 12.3) divise par symétrie axiale l'écoulement en direction du canal intérieur (3*),

• le fait dévier vers l'extérieur et l'accélère en outre dans une section transversale d'espace annulaire ($A_s$) rétrécie à la manière d'une buse entre le corps de refoulement (12; 12.1, 12.2, 12.3) et un contour intérieur de la bride d'échangeur (5) et/ou du raccord (8d), et

• forme ensuite conjointement avec la section transversale de passage élargie (5c, 8c) une section transversale d'espace annulaire s'élargissant ($A_{SE}$).

2. Echangeur thermique à faisceau tubulaire selon la revendication 1, **caractérisé en ce que** le corps de refoulement (12; 12.1, 12.2, 12.3) possède dans la section transversale de passage élargie (5c, 8c) un point de rupture d'écoulement (12d; 12.1d, 12.2d, 12.3d).

3. Echangeur thermique à faisceau tubulaire selon la revendication 2, **caractérisé en ce que** le point de rupture d'écoulement (12d; 12.1d, 12.2d, 12.3d) est positionné à l'endroit le plus étroit (section transversale d'espace annulaire minimale $A_{Smin}$) de la section transversale de l'espace annulaire ($A_S$).

4. Echangeur thermique à faisceau tubulaire selon la revendication 2, **caractérisé en ce que** le point de rupture d'écoulement (12d; 12.1d, 12.2d, 12.3d), vu dans le sens d'écoulement, est positionné après l'endroit le plus étroit (section transversale d'espace annulaire minimale $A_{Smin}$) de la section transversale d'espace annulaire ($A_S$).

5. Echangeur thermique à faisceau tubulaire selon l'une quelconque des revendications 1 à 4, **caractérisé en ce que** le corps de refoulement (12; 12.1, 12.2, 12.3) est relié de manière fixe à la plaque de support de tube (7, 8).

6. Echangeur thermique à faisceau tubulaire selon l'une quelconque des revendications 1 à 5, **caractérisé en ce qu'**un diamètre extérieur ($d_{max}$) du corps de refoulement (12; 12.1, 12.2, 12.3) est dimensionné de telle sorte qu'une section transversale de passage, formée par un diamètre intérieur respectif de tube ($D_i$), des tubes intérieurs (3) situés au bord extérieur de la plaque de support de tube (7, 8) est recouverte à chaque fois presque de moitié par le biais d'une surface d'afflux ($a_{max}$) projetée dans le sens de la plaque de support de tube (7, 8), du corps de refoulement (12; 12.1, 12.2, 12.3).

7. Echangeur thermique à faisceau tubulaire selon la revendication 5 ou 6, **caractérisé en ce que** le plus grand diamètre extérieur commun ($d_{max}$) est formé au niveau de la section transversale de liaison de la partie avant à symétrie axiale (12a; 12.1 a, 12.2a, 12.3a) avec la partie arrière à symétrie axiale (12b; 12.1 b, 12.2b, 12.3b) affectant la forme d'une arête définie de rupture d'écoulement (12d; 12.1d, 12.2d, 12.3d).

8. Echangeur thermique à faisceau tubulaire selon la revendication 7, **caractérisé en ce qu'**une deuxième longueur axiale ($l_2$) de la partie arrière (12b; 12.1 b, 12.2b, 12.3b) est inférieure à une première longueur axiale ($l_1$) de la partie avant (12a; 12.1a, 12.2a, 12.3a), de préférence avec $l_2 \leq 0,5\, l_1$.

9. Echangeur thermique à faisceau tubulaire selon la revendication 7 ou 8, **caractérisé en ce que** la partie arrière (12b; 12.1 b, 12.2b, 12.3b) est délimitée par un contour extérieur convexe avec un deuxième rayon de courbure ($R_2$).

10. Echangeur thermique à faisceau tubulaire selon l'une quelconque des revendications 7 à 9, **caractérisé en ce que** la partie arrière (12b; 12.1 b, 12.2b, 12.3b) possède une tige (12c; 12.1c, 12.2c, 12.3c) dotée d'une troisième longueur axiale ($l_3$) et d'un diamètre de tige ($d_3$) nettement réduit par rapport au diamètre extérieur ($d_{max}$) du corps de refoulement, tige qui comporte un arrondi par rapport au deuxième rayon de courbure ($R_2$) avec un arrondi de tige ($r_4$), et par le biais de laquelle une liaison par conjugaison de matières, de formes et/ou par adhérence a lieu avec la plaque de support de tube (7, 8).

11. Echangeur thermique à faisceau tubulaire selon l'une quelconque des revendications 7 à 10, **caractérisé en ce qu'**un premier corps de refoulement (12.1) est prévu, dont la partie avant (12.1a) est courbée de façon convexe en forme de champignon, les deux premiers rayons de courbure ($R_1$) étant reliés au niveau de l'extrémité avant à un premier arrondi de pointe ($r_1$).

**12.** Echangeur thermique à faisceau tubulaire selon l'une quelconque des revendications 7 à 10, **caractérisé en ce qu'**un deuxième corps de refoulement (12.2) est prévu, dont la partie avant (12.2a) est réalisée comme cône droit de révolution avec un deuxième arrondi de pointe ($r_2$).

**13.** Echangeur thermique à faisceau tubulaire selon l'une quelconque des revendications 7 à 10, **caractérisé en ce qu'**un troisième corps de refoulement (12.3) est prévu dont la partie avant (12.3a) est conique et formée avec une surface latérale courbée de façon concave, les deux troisièmes rayons de courbure ($R_3$) étant reliés au niveau de l'extrémité avant à un troisième arrondi de pointe ($r_3$).

**14.** Echangeur thermique à faisceau tubulaire (1), en particulier pour l'industrie alimentaire et des boissons, avec un canal extérieur (2*) entouré d'une enveloppe extérieure (2) pour un milieu caloporteur (W), avec une quantité de tubes intérieurs (3) formant ensemble un canal intérieur (3*), s'étendant de façon parallèle à l'axe de l'enveloppe extérieure (2) à travers le canal extérieur (2*), respectivement supportés côté extrémité dans la plaque de support de tube (7, 8), avec une entrée (E) ou sortie (A) commune à tous les tubes intérieurs (3), formée dans une bride d'échangeur (5) située côté palier fixe et une sortie (A) et/ou entrée (E) commune pour un produit (P), formée dans un raccord (8d) situé côté palier libre, et avec au moins un corps de refoulement (12) influençant l'écoulement dans la zone d'afflux de la plaque de support de tube (7, 8), **caractérisé en ce**

- **que** dans la zone d'afflux de la plaque de support de tube respective (7, 8) est disposé le corps de refoulement (12),
- **que** la zone d'afflux est délimitée côté extérieur par une première et/ou deuxième section transversale de passage élargie (5c, 8c) à l'intérieur de la bride d'échangeur (5) et/ou du raccord (8d),
- **que** le corps de refoulement (12) est conçu comme sphère (12.4) qui est positionnée de manière librement mobile dans la section transversale de passage élargie (5c, 8c),
- **que** la sphère (12.4) est fabriquée en polytétrafluoréthylène (PTFE) ou en matière plastique semi‑cristalline à haute performance, comme par exemple le polyéther éther cétone (PEEK), ou un thermoplastique amorphe, comme par exemple le polyphénylsulfone (PPSU),
- **que** la sphère (12.4) divise l'écoulement en direction du canal intérieur (3*) par symétrie axiale,
- le fait dévier vers l'extérieur et l'accélère en outre dans une section transversale d'espace annulaire ($A_S$) rétrécie à la manière d'une buse entre la sphère (12.4) et un contour intérieur de la bride d'échangeur (5) et/ou du raccord (8d) et
- forme ensuite conjointement avec la section transversale de passage élargie (5c, 8c) une section transversale d'espace annulaire s'élargissant ($A_{SE}$).

**15.** Echangeur thermique à faisceau tubulaire selon l'une quelconque des revendications 1 à 14, **caractérisé en ce qu'**aucun tube intérieur (3) n'est disposé au centre de l'enveloppe extérieure (2), indépendamment du nombre de tubes intérieurs (3).

**16.** Echangeur thermique à faisceau tubulaire selon l'une quelconque des revendications 1 à 15, **caractérisé en ce que** le rapport entre une section transversale de passage nominale $A_0$ d'un arc de liaison (11) et la section transversale d'espace annulaire minimale ($A_{Smin}$) est réalisé avec $1{,}5 \leq \dfrac{A_0}{A_{S\,min}} \leq 2{,}5,$ notamment avec

$$\frac{A_0}{A_{S\,min}} = 2.$$

Fig. 1

Fig. 2

Fig. 3

Fig.4

EP 1 604 162 B1

Fig. 5

Fig.6   Fig.7   Fig.8   Fig.9